(19) Europäisches Patentamt / European Patent Office / Office européen des brevets

(11) **EP 3 369 750 A1**

(12) **EUROPEAN PATENT APPLICATION**
published in accordance with Art. 153(4) EPC

(43) Date of publication:
**05.09.2018 Bulletin 2018/36**

(21) Application number: **16859673.2**

(22) Date of filing: **20.10.2016**

(51) Int Cl.:
**C08F 2/44** (2006.01)   **C08F 2/22** (2006.01)
**C08F 265/06** (2006.01)   **D21H 19/42** (2006.01)
**D21H 21/54** (2006.01)

(86) International application number:
**PCT/JP2016/081066**

(87) International publication number:
**WO 2017/073443 (04.05.2017 Gazette 2017/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.10.2015 JP 2015212743**

(71) Applicant: **Zeon Corporation
Tokyo 100-8246 (JP)**

(72) Inventor: **KITAGAWA Masaru
Tokyo 100-8246 (JP)**

(74) Representative: **Adam, Holger
Kraus & Weisert
Patentanwälte PartGmbB
Thomas-Wimmer-Ring 15
80539 München (DE)**

(54) **METHOD FOR PRODUCING AQUEOUS DISPERSION OF HOLLOW POLYMER PARTICLES, COMPOSITION FOR PAPER COATING, AND COATED PAPER**

(57) The present invention includes the following: a core forming step of forming core polymer particles (A) by copolymerizing a monomer mixture (a); a first shell layer forming step of forming a first shell layer (B) which substantially surrounds the core polymer particles (A) and is not swollen by a base by copolymerizing a monomer mixture (b) in the presence of the core polymer particles (A); a core swelling step of swelling the core polymer particles (A) by adding a base to an aqueous dispersion containing the core polymer particles (A) on which the first shell layer (B) has been formed in an amount of 0.1 to 30 parts by weight with respect to a total of 100 parts by weight of a monomer contained in the monomer mixture (a) and the monomer mixture (b); and a shell swelling step of swelling the first shell layer (B) by adding a monomer mixture (c) to an aqueous dispersion containing the core polymer particles (A) on which the first shell layer (B) has been formed in an amount of 0.1 to 45 parts by weight with respect to a total of 100 parts by weight of a monomer contained in the monomer mixture (a) and the monomer mixture (b), in which a difference in water contents represented by (a water content in the core polymer particles (A) on which the first shell layer (B) has been formed after the shell swelling step) - (a water content in the core polymer particles (A) on which the first shell layer (B) has been formed before the shell swelling step) is 1 to 45%.

EP 3 369 750 A1

**Description**

{Technical Field}

The present invention relates to a method for producing an aqueous dispersion of hollow polymer particles, a composition for paper coating, and coated paper.

{Background Art}

Hollow polymer particles are used generally for applications such as a masking agent, a water-based paint as an organic pigment having excellent optical properties such as opacity, whiteness, and glossiness, and a composition for paper coating, because of higher light diffusivity and lower light transmittance compared to polymer particles in which a polymer is densely and uniformly filled, and particle deformability.

In such applications, it is desired that the porosity of hollow polymer particles blended is increased and a variety of characteristics is improved so as to reduce the weight of paints and coated paper and to improve effects such as heat insulation, opacification, and high gloss by hollow polymer particles.

A coating composition containing hollow polymer particles has been conventionally used to produce coated paper as a composition for paper coating. Patent Literature 1, for example, discloses, in order to obtain an aqueous dispersion of hollow polymer particles with a few aggregates, a method for obtaining an aqueous dispersion of hollow polymer particles, in which a base is added to an aqueous dispersion containing polymer particles having a four-layered structure of core polymer particles, an inner shell layer, an intermediate shell layer, and an outer shell layer to adjust pH to 7 or higher and thus a part of an acid group contained in the core polymer particles is neutralized to form voids in the inside of core polymer particles.

Further, in order to increase porosity and obtain lightweight and low-density hollow polymer particles, Patent Literatures 2 and 3 also disclose a method for obtaining an aqueous dispersion of hollow polymer particles in which after forming a shell layer on core polymer particles, core polymer particles are swollen by adding a base in the presence of a unreacted monomer to induce a shell layer and then a shell layer is finally formed by copolymerizing the unreacted monomer. When using hollow polymer particles as an organic pigment for paper coating, it is required to not only increase porosity but also improve sheet gloss. However, the sheet gloss of coated paper to which the aqueous dispersion is applied has not been sufficiently high.

{Citation List}

{Patent Literature}

> Patent Literature 1: WO2014/142237 A
> Patent Literature 2: JP 4413295 B2
> Patent Literature 3: JP 2002-241448 A

{Summary of Invention}

{Technical Problem}

An object of the present invention is to provide a method for producing an aqueous dispersion of hollow polymer particles by which hollow polymer particles with a high porosity and moreover a sufficient sheet gloss when used to produce coated paper can be obtained, and moreover to provide a composition for paper coating using the hollow polymer particles and coated paper.

{Solution to Problem}

The present inventors diligently investigated to solve the above problems, and as a result, it was found that the above problems could be solved by swelling core polymer particles (A) using a predetermined amount of base, swelling a first shell layer (B) which substantially surrounds core polymer particles (A) in the presence of a predetermined amount of monomer, and setting a difference in water contents before and after swelling the first shell layer (B) to a predetermined range, thereby completing the present invention.

According to the present invention, provided are

(1) A method for producing an aqueous dispersion of hollow polymer particles, the method including: a core forming step of forming core polymer particles (A) by copolymerizing a monomer mixture (a); a first shell layer forming step of forming a first shell layer (B) which substantially surrounds the core polymer particles (A) and is not swollen by a base by copolymerizing a monomer mixture (b) in the presence of the core polymer particles (A); a core swelling step of swelling the core polymer particles (A) by adding a base to an aqueous dispersion containing the core polymer particles (A) on which the first shell layer (B) has been formed in an amount of 0.1 to 30 parts by weight with respect to a total of 100 parts by weight of a monomer contained in the monomer mixture (a) and the monomer mixture (b); and a shell swelling step of swelling the first shell layer (B) by adding a monomer mixture (c) to an aqueous dispersion containing the core polymer particles (A) on which the first shell layer (B) has been formed in an amount of 0.1 to 45 parts by weight with respect to a total of 100 parts by weight of a monomer contained in the monomer mixture (a) and the monomer mixture (b), in which a difference in water contents represented by (a water content in the core polymer particles (A) on which the first shell layer (B) has been formed after the shell swelling step) - (a water content in the core polymer particles (A) on which the first shell layer (B) has been formed before the shell swelling step) is 1 to 45%,

(2) The method for producing an aqueous dispersion of hollow polymer particles according to (1), the method including a second shell layer forming step of forming a second shell layer (C) by copolymerizing the monomer mixture (c) to the swollen core polymer particles (A) in the presence of an aqueous dispersion containing the core polymer particles (A) on which the swollen first shell layer (B) has been formed after the core swelling step and the shell swelling step,

(3) The method for producing an aqueous dispersion of hollow polymer particles according to (1) or (2), in which the first shell layer forming step includes: an inner shell layer forming step of forming an inner shell layer (B1) which substantially surrounds the core polymer particles (A) by copolymerizing a monomer mixture (b1) in the presence of the core polymer particles (A); an intermediate shell layer forming step of forming an intermediate shell layer (B2) which substantially surrounds the inner shell layer (B1) by copolymerizing a monomer mixture (b2) in the presence of the core polymer particles (A) on which the inner shell layer (B1) has been formed; and an outer shell layer forming step of forming an outer shell layer (B3) which substantially surrounds the intermediate shell layer (B2) by copolymerizing a monomer mixture (b3) in the presence of the core polymer particles (A) on which the inner shell layer (B1) and the intermediate shell layer (B2) have been formed,

(4) The method for producing an aqueous dispersion of hollow polymer particles according to (3), in which the monomer mixture (a) includes 20 to 50% by weight of an acid group-containing monomer and 50 to 80% by weight of a monomer copolymerizable with this, the monomer mixture (b1) includes 1 to 10% by weight of an acid group-containing monomer and 90 to 99% by weight of a monomer copolymerizable with this, the monomer mixture (b2) includes 0.2 to 2.5% by weight of an acid group-containing monomer and 97.5 to 99.8% by weight of a monomer copolymerizable with this, and the monomer mixture (b3) includes 0 to 0.15% by weight of an acid group-containing monomer and 99.85 to 100% by weight of a monomer other than the acid group-containing monomer,

(5) The method for producing an aqueous dispersion of hollow polymer particles according to (3) or (4), in which a proportion of the monomer mixture (a), the monomer mixture (b1), the monomer mixture (b2), and the monomer mixture (b3) is (1 to 40) / (1 to 40) / (10 to 88) / (10 to 88) as a weight ratio of "monomer mixture (a)/monomer mixture (b1) /monomer mixture (b2)/monomer mixture (b3)",

(6) A composition for paper coating obtained by using an aqueous dispersion of hollow polymer particles obtained by the method for production according to (1) to (5), and

(7) Coated paper obtained by using the composition for paper coating according to (6).

{Advantageous Effects of Invention}

According to the method for producing an aqueous dispersion of hollow polymer particles in the present invention, it is possible to obtain hollow polymer particles with a high porosity and moreover a sufficient sheet gloss when used to produce coated paper, and a composition for paper coating using the hollow polymer particles, and coated paper.

{Description of Embodiments}

Hereinafter, the method for producing an aqueous dispersion of hollow polymer particles in the present invention will be described. The method for producing an aqueous dispersion of hollow polymer particles in the present invention includes a core forming step of forming core polymer particles (A) by copolymerizing a monomer mixture (a), a first shell layer forming step of forming a first shell layer (B) which substantially surrounds the core polymer particles (A) and is not swollen by a base by copolymerizing a monomer mixture (b) in the presence of the core polymer particles (A), a core swelling step of swelling the core polymer particles (A) by adding a base to an aqueous dispersion containing the core polymer particles (A) on which the first shell layer (B) has been formed in an amount of 0.1 to 30 parts by weight with respect to a total of 100 parts by weight of a monomer contained in the monomer mixture (a) and the monomer mixture (b), and a shell swelling step of swelling the first shell layer (B) by adding a monomer mixture (c) to an aqueous dispersion containing the core polymer particles (A) on which the first shell layer (B) has been formed in an amount of 0.1 to 45 parts by weight with respect to a total of 100 parts by weight of a monomer contained in the monomer mixture (a) and the monomer mixture (b), and a difference in water contents represented by (a water content in the core polymer particles (A) on which the first shell layer (B) has been formed after the shell swelling step) - (a water content in the core polymer particles (A) on which the first shell layer (B) has been formed before the shell swelling step) is 1 to 45%.

(Core forming step)

In the core forming step in the present invention, a monomer mixture (a) is copolymerized to form core polymer particles (A).

The monomers contained in a monomer mixture (a) to form core polymer particles (A) are not particularly limited and are preferably those which contain 20 to 50% by weight of an acid group-containing monomer and 50 to 80% by weight of a monomer copolymerizable with the acid group-containing monomer.

The acid group-containing monomer is a monomer having an acid functional group, and examples thereof include ethylenically unsaturated monocarboxylic acids such as acrylic acid, methacrylic acid, crotonic acid, and cinnamic acid; ethylenically unsaturated polycarboxylic acids such as itaconic acid, fumaric acid, maleic acid, and butenetricarboxylic acid; partially esterified substances of an ethylenically unsaturated polycarboxylic acid such as monobutyl fumarate and monobutyl maleate; sulfonic acid group-containing monomers such as styrene sulfonic acid; and the like. Among these, an ethylenically unsaturated monocarboxylic acid monomer is preferable, (meth)acrylic acid (which represents "acrylic acid and methacrylic acid", the same applies hereinafter.) is more preferable, and methacrylic acid is particularly preferable because the effect of the present invention becomes further remarkable. It should be noted that these monomers can be used individually or two or more monomers can be used in combination.

The content ratio of an acid group-containing monomer in a monomer mixture (a) is preferably 20 to 50% by weight and more preferably 25 to 45% by weight. When the content ratio of an acid group-containing monomer contained is in the above range, a phenomenon that core polymer particles (A) are not easily swollen by a base and it is difficult to form voids in the core swelling step described below due to too small content ratio of an acid group-containing monomer can be suppressed, and a phenomenon that the core polymer particles (A) are not fully surrounded by the first shell layer (B) and the stability of an aqueous dispersion is reduced in the core swelling step to easily generate aggregates due to too large content ratio of an acid group-containing monomer can be also suppressed.

The copolymerizable monomer is only needed to be a monomer copolymerizable with an acid group-containing monomer, is not particularly limited, and includes aromatic vinyl monomers such as styrene, α-methylstyrene, p-methylstyrene, and halogenated styrene; ethylenically unsaturated nitrile monomers such as acrylonitrile and methacrylonitrile; ethylenically unsaturated carboxylic acid ester monomers such as methyl (meth)acrylate, ethyl (meth)acrylate, butyl (meth)acrylate, 2-ethylhexyl (meth)acrylate, lauryl (meth)acrylate, glycidyl (meth)acrylate, and 2-hydroxyethyl (meth)acrylate; ethylenically unsaturated carboxylic acid amide monomers such as (meth)acrylamide, N-methylol (meth)acrylamide, and N-butoxymethyl (meth)acrylamide; conjugated diene monomers such as butadiene and isoprene; carboxylic acid vinyl ester monomers such as vinyl acetate; halogenated vinyl monomers such as vinyl chloride; vinylidene halide monomers such as vinylidene chloride; vinylpyridine; and the like, and is preferably an ethylenically unsaturated carboxylic acid ester monomer, more preferably an ethylenically unsaturated monocarboxylic acid alkyl ester monomer, and particularly preferably methyl (meth)acrylate and butyl (meth)acrylate. It should be noted that the number of carbon atoms in the alkyl group of the above ethylenically unsaturated monocarboxylic acid alkyl ester monomer is preferably 1 to 6. In addition, these monomers can be used individually or two or more monomers can be used in combination.

The content ratio of copolymerizable monomer contained in a monomer mixture (a) is preferably 50 to 80% by weight and more preferably 55 to 75% by weight.

In addition, in the present invention, methyl methacrylate, butyl acrylate, and methacrylic acid used in combination as monomers constituting a monomer mixture (a) are particularly preferable, and the content ratio of these monomers is preferably 35 to 77% by weight of methyl methacrylate, 3 to 15% by weight of butyl acrylate, and 20 to 50% by weight of methacrylic acid, more preferably 42 to 71% by weight of methyl methacrylate, 4 to 13% by weight of butyl acrylate, and 25 to 45% by weight of methacrylic acid, and particularly preferably 45 to 65% by weight of methyl methacrylate, 5 to 12% by weight of butyl acrylate, and 30 to 43% by weight of methacrylic acid.

In addition, cross-linkable monomers such as divinylbenzene, diallyl phthalate, allyl (meth)acrylate, and ethylene glycol di(meth)acrylate can be blended in a monomer mixture (a). The use amount of cross-linkable monomer in a monomer mixture (a) is desirably in a range in which the stable formation of voids can be maintained, and is preferably 20% by weight or less, more preferably 10% by weight or less, and particularly preferably 1% by weight or less. When the use amount of cross-linkable monomer is in the above range, a phenomenon that core polymer particles (A) are not easily swollen by a base and it is difficult to form voids due to too large use amount of cross-linkable monomer can be suppressed.

The copolymerization of a monomer mixture (a) is normally carried out in an aqueous medium. Therefore, core polymer particles (A) obtained by copolymerization are normally obtained in a state of an aqueous dispersion. As an aqueous medium, water is usually used, and a water-soluble organic solvent such as methanol or ethanol can be used in combination in a range in which the dispersion stability of polymer particles is not deteriorated during the production. The use amount of aqueous medium is usually 100 to 1000 parts by weight, and preferably 200 to 600 parts by weight with respect to 100 parts by weight of a monomer mixture (a). When the use amount of aqueous medium is in the above range, a phenomenon that the amount of aggregate generated during polymerization increases due to too small use amount of aqueous medium can be suppressed, and a phenomenon that the productivity of hollow polymer particles is poor due to too large use amount of aqueous medium can be also suppressed.

The method for copolymerizing a monomer mixture (a) is not particularly limited and is usually an emulsion polymerization method. The polymerization system can be any of batch, semicontinuous, and continuous systems. The polymerization pressure, polymerization temperature, and polymerization time are not particularly limited, and known conditions are adopted. In the emulsion polymerization, a variety of additives which are generally used for an emulsion polymerization reaction such as a surfactant, a polymerization initiator, a chain transfer agent, a chelating agent, an electrolyte, and a deoxygenating agent can be used as a subsidiary polymerization material.

As a surfactant used for emulsion polymerization, known surfactants can be generally used and specifically include anionic surfactants, such as rosin acid salts such as potassium rosinate and sodium rosinate; fatty acid salts such as potassium oleate, potassium laurate, sodium laurate, sodium stearate, and potassium stearate; sulfuric acid ester salts of aliphatic alcohol such as sodium lauryl sulfate; and alkylaryl sulfonic acid such as sodium dodecylbenzenesulfonate; nonionic surfactants such as alkyl ether sulfuric acid salts such as sodium polyoxyethylene alkyl ether sulfate; alkyl esters, alkyl ethers, or alkyl phenyl ethers of polyethylene glycol; dispersion stabilizers such as hydrophilic synthetic polymer substances such as polyacrylic acid, polymethacrylic acid, polyvinyl sulfonic acid, polyvinyl alcohol, polyvinylpyrrolidone, and polyethylene glycol; natural hydrophilic polymer substances such as gelatin and water soluble starch; hydrophilic semisynthetic polymer substances such as carboxymethyl cellulose, and the like. These surfactants can be used individually or two or more surfactants can be used in combination. Among these, an alkyl ether sulfuric acid salt such as a sodium polyoxyethylene alkyl ether sulfate is preferable because polymerization stability is good.

The use amount of surfactant is preferably 0.1 to 5 parts by weight, and more preferably 0.5 to 3 parts by weight with respect to 100 parts by weight of a monomer mixture (a). When the use amount of surfactant is in the above range, a phenomenon that aggregates are easily generated during polymerization due to too small use amount of surfactant can be suppressed, and a phenomenon that the porosity of hollow polymer particles obtained is reduced and a variety of characteristics are lowered due to too large use amount of surfactant can be also suppressed.

In addition, the copolymerization of a monomer mixture (a) is preferably carried out in the presence of seeds, and the particle diameter of core polymer particles (A) generated can be easily controlled by using seeds.

The polymerization conversion rate of a monomer mixture (a) in emulsion polymerization is usually 90% by weight or more and preferably 97% by weight or more. Normally, the composition of a copolymer generated is almost equal to the composition of a monomer mixture (a).

The method for adding a surfactant when carrying out emulsion polymerization is not particularly limited, and a surfactant can be added to a reaction system at once, or in parts or continuously. A method in which a surfactant is continuously added to a reaction system is however preferred because the generation of aggregates during polymerization is suppressed. In addition, a monomer mixture (a) and a surfactant can be mixed and then added to a reaction system, or can be added separately to a reaction system. It is preferred, however, that a monomer mixture (a) and a surfactant are mixed with an aqueous medium and are added to a reaction system in an emulsion state.

In addition, in emulsion polymerization, an inorganic salt is added to a reaction system, and copolymerization can be carried out in the presence of the inorganic salt. Particularly, when a surfactant and an inorganic salt are used in combination, the generation of aggregates during polymerization can be effectively suppressed and particle diameter distribution can be narrowed. The inorganic salt is not particularly limited, and specifically includes alkali metal salts such as sodium chloride, potassium chloride, sodium sulfate, potassium sulfate, sodium nitrate, sodium carbonate, sodium hydrogen carbonate, potassium carbonate, sodium phosphate, and sodium tripolyphosphate; alkaline earth metal salts such as calcium chloride and barium sulfate; aluminum sulfate, aluminum chloride, and the like. Among these, alkali metal salts are preferable, and sodium tripolyphosphate is more preferable. The use amount of inorganic salt is preferably 0.01 to 1 part by weight and more preferably 0.05 to 0.5 parts by weight with respect to 100 parts by weight of a monomer mixture (a). When the use amount of inorganic salt is in the above range, a phenomenon that the effect of addition is not easily expressed due to too small use amount of inorganic salt can be suppressed, and a phenomenon that aggregates are easily generated during polymerization due to too large use amount of inorganic salt can be also suppressed. In addition, the method for adding an inorganic salt is not particularly limited, and an inorganic salt can be added to a reaction system at once, or in parts or continuously.

The volume average particle diameter of core polymer particles (A) obtained by emulsion polymerization is preferably 100 to 600 nm and more preferably 250 to 500 nm. When the volume average particle diameter is in the above range, a phenomenon that it is difficult to produce hollow polymer particles with a high porosity and a large particle diameter due to too small volume average particle diameter can be suppressed, and a phenomenon that it is difficult to cover the core polymer particles (A) with a first shell layer (B) and it is difficult to form voids in the core polymer particles (A) due to too large volume average particle diameter can be also suppressed.

(First shell layer forming step)

In the first shell layer forming step in the present invention, a monomer mixture (b) is copolymerized in the presence of the core polymer particles (A) to form a first shell layer (B) which substantially surrounds the core polymer particles (A) and is not swollen by a base. Here, not being swollen by a base means that a water content in a shell layer is not changed before and after adding the base.

In order to verify that a shell layer is not swollen, that is, the water content is not changed before and after adding a base, a monomer mixture constituting a shell layer is copolymerized to produce dense polymer particles. Specifically, when the water content in dense polymer particles is not changed before and after adding a base by a method for measuring the water content described below, not being swollen can be verified even in a case where a shell layer is formed. Here, the first shell layer (B) can be a layer or can be formed with two or more layers. The number of layers forming a first shell layer (B) is not particularly limited, and for example a shell layer formed with three layers, an inner shell layer (B1), an intermediate shell layer (B2), and an outer shell layer (B3), can be adopted as a first shell layer (B).

Such a first shell layer (B) formed with three layers can be obtained by an inner shell layer forming step of forming an inner shell layer (B1) which substantially surrounds core polymer particles (A) by copolymerizing a monomer mixture (b1) in the presence of the core polymer particles (A), an intermediate shell layer forming step of forming an intermediate shell layer (B2) which substantially surrounds the inner shell layer (B1) by copolymerizing a monomer mixture (b2) in the presence of core polymer particles (A) on which the inner shell layer (B1) has been formed, and an outer shell layer forming step of forming an outer shell layer (B3) which substantially surrounds the intermediate shell layer (B2) by copolymerizing a monomer mixture (b3) in the presence of the core polymer particles (A) on which the inner shell layer (B1) and the intermediate shell layer (B2) have been formed.

Hereinafter, a case where a first shell layer (B) is formed with three layers will be described.

Inner shell layer forming step

In the inner shell layer forming step, a monomer mixture (b1) is copolymerized in the presence of the core polymer particles (A) to form an inner shell layer (B1) which substantially surrounds the core polymer particles (A).

The monomers contained in the monomer mixture (b1) to form the inner shell layer (B1) are not particularly limited, and are preferably those which contain 1 to 10% by weight of an acid group-containing monomer and 90 to 99% by weight of a monomer copolymerizable with the acid group-containing monomer.

The acid group-containing monomer is not particularly limited, and the same as in the above-described core polymer particles (A) can be used. However, an ethylenically unsaturated monocarboxylic acid monomer is preferable, (meth)acrylic acid is more preferable, and methacrylic acid is particularly preferable. The content ratio of an acid group-containing monomer contained in a monomer mixture (b1) is preferably 1 to 10% by weight, more preferably 3 to 9% by weight, and further preferably 5 to 8% by weight.

The copolymerizable monomer is not particularly limited, and the same as in the above-described core polymer particles (A) can be used. Among those, an ethylenically unsaturated carboxylic acid ester monomer is preferable, an ethylenically unsaturated monocarboxylic acid alkyl ester monomer is more preferable, methyl (meth)acrylate and butyl (meth)acrylate are further preferable, and methyl methacrylate and butyl acrylate are particularly preferable. It should be noted that the number of carbon atoms in the alkyl group of the above ethylenically unsaturated monocarboxylic acid alkyl ester monomer is preferably 1 to 6. In addition, these monomers can be used individually or two or more monomers can be used in combination.

The content ratio of copolymerizable monomer in a monomer mixture (b1) is preferably 90 to 99% by weight, more preferably 91 to 97% by weight, and further preferably 92 to 95% by weight.

In addition, in the present invention, methyl methacrylate, butyl acrylate, and methacrylic acid and/or acrylic acid used in combination as monomers constituting a monomer mixture (b1) are particularly preferable, and the content ratio of these monomers is preferably 68 to 89% by weight of methyl methacrylate, 10 to 22% by weight of butyl acrylate, and 1 to 10% by weight of methacrylic acid and/or acrylic acid, more preferably 71 to 85% by weight of methyl methacrylate, 12 to 20% by weight of butyl acrylate, and 3 to 9% by weight of methacrylic acid and/or acrylic acid, and particularly preferably 74 to 81% by weight of methyl methacrylate, 14 to 18% by weight of butyl acrylate, and 5 to 8% by weight of methacrylic acid and/or acrylic acid.

The method for copolymerizing a monomer mixture (b1) in the presence of core polymer particles (A) is not particularly limited and is preferably a method in which a monomer mixture (b1) is emulsion-polymerized in an aqueous dispersion of core polymer particles (A), and thus core polymer particles (A) on which an inner shell layer (B1) has been formed can be obtained. As the polymerization system, any of batch, semicontinuous, and continuous systems can be used. In addition, the polymerization pressure, polymerization temperature, and polymerization time are not particularly limited, and known conditions can be adopted.

In the emulsion polymerization of a monomer mixture (b1), a subsidiary polymerization material exemplified in the production of core polymer particles (A) can be used. In addition, in the emulsion polymerization of a monomer mixture (b1), a chain transfer agent may be used in addition to a subsidiary polymerization material exemplified in the production of core polymer particles (A). As the chain transfer agent, known chain transfer agents used for general emulsion polymerization can be used, and examples thereof include mercaptans such as octylmercaptan, n-dodecylmercaptan, t-dodecylmercaptan, n-hexadecylmercaptan, n-tetradecylmercaptan, and t-tetradecylmercaptan; xanthogen disulfides such as dimethyl xanthogen disulfide, diethyl xanthogen disulfide, and diisopropyl xanthogen disulfide; thiuram disulfides such as tetramethylthiuram disulfide, tetraethylthiuram disulfide, and tetrabutylthiuram disulfide; halogenated hydrocarbons such as carbon tetrachloride and carbon tetrabromide; hydrocarbons such as diphenylethylene, pentaphenylethane, and α-methylstyrene dimer; acrolein, methacrolein, allyl alcohol, 2-ethylhexyl thioglycolate, terpinolene, α-terpinene, γ-terpinene, dipentene, and the like. These chain transfer agents can be used individually or two or more chain transfer agents can be used in combination. Among these, mercaptans and α-methylstyrene dimer are preferable, mercaptans are more preferable, and t-dodecylmercaptan is particularly preferable.

Intermediate shell layer forming step

In the intermediate shell layer forming step, a monomer mixture (b2) is copolymerized in the presence of core polymer particles (A) on which the inner shell layer (B1) has been formed to form an intermediate shell layer (B2) which substantially surrounds the inner shell layer (B1).

The monomers contained in the monomer mixture (b2) to form the intermediate shell layer (B2) are not particularly limited, and are preferably those which contain 0.2 to 2.5% by weight of an acid group-containing monomer and 97.5 to 99.8% by weight of a monomer copolymerizable with the acid group-containing monomer.

The acid group-containing monomer is not particularly limited, and the same as in the above-described core polymer particles (A) can be used. However, an ethylenically unsaturated monocarboxylic acid monomer is preferable and (meth)acrylic acid is more preferable. The content ratio of an acid group-containing monomer contained in a monomer mixture (b2) is preferably 0.2 to 2.5% by weight, more preferably 0.3 to 2.2% by weight, and further preferably 0.4 to 1.8% by weight.

In addition, the copolymerizable monomer is not particularly limited, and the same as in the above-described core polymer particles (A) can be used. Among those, an aromatic vinyl monomer and an ethylenically unsaturated monocarboxylic acid ester monomer are preferable, an aromatic vinyl monomer is more preferable, and styrene is particularly preferable. The content ratio of copolymerizable monomer in a monomer mixture (b2) is preferably 97.5 to 99.8% by weight, more preferably 97.8 to 99.7% by weight, and further preferably 98.2 to 99.6% by weight.

In addition, in the present invention, methacrylic acid and/or acrylic acid and styrene used in combination as monomers constituting a monomer mixture (b2) are particularly preferable, and the content ratio of these monomers is preferably 0.2 to 2.5% by weight of methacrylic acid and/or acrylic acid and 97.5 to 99.8 % by weight of styrene, more preferably 0.3 to 2.2 % by weight of methacrylic acid and/or acrylic acid and 97.8 to 99.7% by weight of styrene, and particularly preferably 0.4 to 1.8% by weight of methacrylic acid and/or acrylic acid and 98.2 to 99.6% by weight of styrene.

The method for copolymerizing a monomer mixture (b2) in the presence of core polymer particles (A) on which the inner shell layer (B1) has been formed is not particularly limited, and is preferably a method in which a monomer mixture (b2) is emulsion-polymerized in an aqueous dispersion of core polymer particles (A) on which the inner shell layer (B1) has been formed, and thus core polymer particles (A) on which the inner shell layer (B1) and the intermediate shell layer (B2) have been formed can be obtained. As the polymerization system, any of batch, semicontinuous, and continuous systems can be used. In addition, the polymerization pressure, polymerization temperature, and polymerization time are not particularly limited, and known conditions can be adopted. In the emulsion polymerization of a monomer mixture (b2), a subsidiary polymerization material exemplified in the production of core polymer particles (A) and the formation of an inner shell layer (B1) can be used.

Outer shell layer forming step

In the outer shell layer forming step, a monomer mixture (b3) is copolymerized in the presence of core polymer particles (A) on which the inner shell layer (B1) and the intermediate shell layer (B2) have been formed to form an outer shell layer (B3) which substantially surrounds the intermediate shell layer (B2).

The content ratio of an acid group-containing monomer in a monomer mixture (b3) is preferably 0.15% by weight or less, more preferably 0.1% by weight or less, further preferably 0.05% by weight or less, and particularly it is desired that the content ratio of an acid group-containing monomer is substantially zero. That is, as a monomer mixture (b3), one which does not contain an acid group-containing monomer is preferably used. The acid group-containing monomer is a monomer having an acid functional group, and typical examples thereof include those exemplified in the above-described core polymer particles (A) and the like. When the content ratio of an acid group-containing monomer contained is in the above range, a phenomenon that the amount of aggregate in an aqueous dispersion of hollow polymer particles increases due to too large content ratio of an acid group-containing monomer can be suppressed.

In addition, monomers other than an acid group-containing monomer contained in a monomer mixture (b3) are not particularly limited, and include aromatic vinyl monomers such as styrene, α-methylstyrene, p-methylstyrene, and halogenated styrenes; ethylenically unsaturated nitrile monomers such as acrylonitrile and methacrylonitrile; ethylenically unsaturated carboxylic acid ester monomers such as methyl (meth)acrylate, ethyl (meth)acrylate, butyl (meth)acrylate, 2-ethylhexyl (meth)acrylate, lauryl (meth)acrylate, glycidyl (meth)acrylate, and 2-hydroxyethyl (meth)acrylate; ethylenically unsaturated carboxylic acid amide monomers such as (meth)acrylamide, N-methylol (meth)acrylamide, and N-butoxymethyl (meth)acrylamide; conjugated diene monomers such as butadiene and isoprene; carboxylic acid vinyl ester monomers such as vinyl acetate; halogenated vinyl monomers such as vinyl chloride; vinylidene halide monomers such as vinylidene chloride; vinylpyridine; and the like. These monomers can be used individually or two or more monomers can be used in combination.

Among these, aromatic vinyl monomers are preferred and styrene is more preferred because an aqueous dispersion of hollow polymer particles in which the amount of aggregate is small is easily obtained.

Furthermore, one which contains only an aromatic vinyl monomer as a monomer mixture (b3) is preferably used, and one which contains only styrene is particularly preferably used.

The method for copolymerizing a monomer mixture (b3) in the presence of core polymer particles (A) on which an inner shell layer (B1) and an intermediate shell layer (B2) have been formed is not particularly limited, and is preferably a method in which a monomer mixture (b3) is emulsion-polymerized in an aqueous dispersion of core polymer particles (A) on which an inner shell layer (B1) and an intermediate shell layer (B2) have been formed, and thus core polymer particles (A) on which an inner shell layer (B1), an intermediate shell layer (B2), and an outer shell layer (B3) have been formed can be obtained. As the polymerization system, any of batch, semicontinuous, and continuous systems can be used. In addition, the polymerization pressure, polymerization temperature, and polymerization time are not particularly limited, and known conditions can be adopted. In the emulsion polymerization of a monomer mixture (b3), a subsidiary polymerization material exemplified in the production of core polymer particles (A) and the formation of an inner shell layer (B1) and an intermediate shell layer (B2) can be used.

In the present invention, the weight ratio of a monomer mixtures to form core polymer particles (A), an inner shell layer (B1), an intermediate shell layer (B2), and an outer shell layer (B3) is as the weight ratio of "monomer mixture (a) /monomer mixture (b1) /monomer mixture (b2) /monomer mixture (b3)" preferably (1 to 40) / (1 to 40) / (10 to 88) / (10 to 88), more preferably (2 to 30) / (2 to 30) / (20 to 76) / (20 to 76), and particularly preferably (5 to 20) / (5 to 20) / (30 to 60)/(30 to 60) from the viewpoint that the effect of the present invention can be further remarkably obtained.

(Core swelling step and shell swelling step)

In the present invention, after the core forming step and the first shell layer forming step, the core swelling step and the shell swelling step are carried out. The shell swelling step may be carried out after the core swelling step, and the core swelling step may be carried out after the shell swelling step. In the present invention, porosity can be increased by the step of two stages, the core swelling step and the shell swelling step.

(Core swelling step)

In the core swelling step in the present invention, a base is added to an aqueous dispersion containing core polymer particles (A) on which a first shell layer (B) has been formed in an amount of 0.1 to 30 parts by weight, preferably 0.5 to 20 parts by weight, and more preferably 0.5 to 10 parts by weight with respect to a total of 100 parts by weight of a monomer contained in a monomer mixture (a) and a monomer mixture (b) to swell the core polymer particles (A).

That is, the core swelling step is a step in which the above amount of base is added to an aqueous dispersion containing core polymer particles (A) on which a first shell layer (B) has been formed to adjust the pH of the aqueous dispersion to 7 or higher and thus at least a part of an acid group contained in the core polymer particles (A) is neutralized to form voids.

As the base, either a volatile base or a non-volatile base can be used, and specific examples of volatile bases include ammonia, ammonium hydroxide, morpholine, trimethylamine, triethylamine, and the like. In addition, specific examples of non-volatile bases include alkali metal hydroxides such as sodium hydroxide, potassium hydroxide, and lithium hydroxide; alkaline earth metal hydroxides such as calcium hydroxide and magnesium hydroxide; alkali metal (bi)carbonic acid salts such as sodium carbonate and potassium bicarbonate; (bi)carbonic acid ammonium salts such as ammonium carbonate and ammonium bicarbonate, and the like. Among these, a volatile base is preferable, and ammonia and ammonium hydroxide are more preferable.

In addition, when adding a base, it is preferred that the base is added in an state of an aqueous solution from the viewpoint that the generation of aggregate during addition is suppressed, and in this case the concentration of base in the aqueous solution is preferably 0.5 to 20% by weight, and more preferably 1 to 10% by weight. In addition, in this case an anionic surfactant and/or a nonionic surfactant may be added before adding the base from the viewpoint that the generation of aggregate during base treatment is suppressed.

In addition, the treatment time when carrying out the core swelling step is only needed to be a time required when a base is sufficiently diffused into the inside of core polymer particles (A), and may be suitably selected in a range of usually 5 to 120 minutes, and preferably 10 to 90 minutes. Further, the temperature when carrying out the core swelling step is preferably not less than a temperature at which core polymer particles (A) are sufficiently softened from a viewpoint of the diffusibility of a base, and is preferably 70 to 95°C.

(Shell swelling step)

The shell swelling step in the present invention is the step of swelling a first shell layer (B) by adding a monomer mixture (c) to an aqueous dispersion containing core polymer particles (A) on which the first shell layer (B) has been formed in an amount of 0.1 to 45 parts by weight, preferably 1 to 40 parts by weight, and more preferably 1 to 30 parts by weight with respect to a total of 100 parts by weight of a monomer contained in a monomer mixture (a) and a monomer mixture (b). The first shell layer (B) is plasticized by the shell swelling step and the core polymer particles (A) can be thus swollen.

In addition, about water contents before and after the shell swelling step, a difference in water contents represented by (a water content in core polymer particles (A) on which a first shell layer (B) has been formed after the shell swelling step) - (a water content in core polymer particles (A) on which a first shell layer (B) has been formed before the shell swelling step) is 1 to 45% and preferably 3 to 40%.

Here, an aqueous dispersion containing core polymer particles (A) on which a first shell layer (B) has been formed in a predetermined solid content weight (Y (g)) is diluted by adding distilled water, and the total weight thereof is used as Z (g). After centrifugation on predetermined conditions, all the supernatant water is taken out and the weight thereof (X (g)) is measured. The water content can be found for example by the following formula.

{Math. 1}

$$\text{Water content (\%)} = \frac{Z - X - Y}{Z - Y} \times 100$$

Higher water content represents that core polymer particles (A) on which a first shell layer (B) has been formed are swollen by water.

The monomer mixture (c) is not particularly limited, and the same as in the above monomer mixture (b3) can be used.

Furthermore, as a monomer mixture (c), one which contains only an aromatic vinyl monomer is preferably used, and one which contains only styrene is particularly preferably used.

In addition, the treatment time when carrying out the shell swelling step is preferably for 5 to 120 minutes. In addition, the temperature when carrying out the shell swelling step is preferably 10 to 95°C and particularly preferably 75 to 95°C from a viewpoint of the plasticization of a shell.

In addition, it is preferred that polymerization is stopped before the shell swelling step. The method for stopping polymerization is not particularly limited, and polymerization is preferably stopped by adding a polymerization inhibitor.

Examples of polymerization inhibitors include hydroxylamine, hydroxyamine sulfate, diethylhydroxyamine, hydroxyamine sulfonic acid and alkali metal salts thereof, sodium dimethyldithiocarbamate, and the like. The use amount of polymerization inhibitor is not particularly limited, and is preferably 0.01 to 2 parts by weight with respect to 100 parts by weight of all monomers used for the polymerization of core polymer particles (A) and a first shell layer (B).

(Second shell layer forming step)

In the present invention, after the core swelling step and the shell swelling step, the second shell layer forming step of forming a second shell layer (C) by copolymerizing a monomer mixture (c) in the presence of an aqueous dispersion containing core polymer particles (A) on which a first shell layer (B) has been formed, which the core polymer particles (A) and the first shell layer (B) are swollen, is preferably carried out.

When forming a second shell layer (C), the polymerization of a monomer mixture (c) is preferably initiated by adding a polymerization initiator after the core swelling step and the shell swelling step.

The polymerization initiators can include azo compounds such as azobisisobutyronitrile; organic peroxides such as diisopropylbenzene hydroperoxide, cumene hydroperoxide, benzoyl peroxide ,and lauroyl peroxide; inorganic peroxides such as potassium persulfate, sodium persulfate, and ammonium persulfate; and the like. These polymerization initiators can be used individually or two or more polymerization initiators can be used in combination. The use amount of polymerization initiator is not particularly limited, and is preferably 0.01 to 1.0 part by weight with respect to 100 parts by weight of all monomers used for the polymerization of core polymer particles (A) and a first shell layer (B).

It should be noted that in the production method of the present invention, the formation of core polymer particles (A), the formation of a first shell layer, the core swelling step, the shell swelling step, and the formation of a second shell layer (C) may be carried out in stages in the same reaction container, or after a previous step, a product obtained in the previous step is transferred to another reaction container to carry out a next step may be adopted.

Next, in order to remove residual monomers contained in an aqueous dispersion of hollow polymer particles obtained as above, steam stripping to blow steam (saturated water vapor) into the aqueous dispersion may be carried out in the production method of the present invention. As the steam stripping, a conventionally known method can be used without limitation. In addition, the steam stripping may be carried out on the condition that the content ratio of residual monomers in an aqueous dispersion of hollow polymer particles is preferably 0.01% by weight or less.

In addition, after removing residual monomers by steam stripping, the pH and solid content concentration of an aqueous dispersion may be adjusted as needed.

In the aqueous dispersion of hollow polymer particles thus obtained by the production method of the present invention, the number average particle diameter of hollow polymer particles is preferably 0.5 to 2.0 $\mu$m, more preferably 0.8 to 1.7 $\mu$m, and further preferably 1.0 to 1.5 $\mu$m. The number average particle diameter of hollow polymer particles can be found for example by measuring the maximum particle diameter of each of 200 hollow polymer particles with a transmission electron microscope and obtaining the arithmetic average thereof.

In addition, the porosity of hollow polymer particles is preferably 30 to 65%, more preferably 40 to 60%, and further preferably 53 to 58%. The porosity of hollow polymer particles can be found by measuring the maximum particle diameter of each of 200 hollow polymer particles and the maximum diameter of voids with a transmission electron microscope and obtaining the arithmetic average of porosity obtained by the measurement results.

Hollow polymer particles with a high porosity and moreover a sufficient sheet gloss when used to produce coated paper can be obtained by the method for producing an aqueous dispersion of hollow polymer particles in the present invention.

An aqueous dispersion of hollow polymer particles obtained by the production method of the present invention can be used as a composition for coated paper for example by blending an inorganic pigment such as calcium carbonate, clay, barium sulfate, calcium carbonate, talc, titanium oxide, satin white, aluminum hydroxide, silica, or mica. Furthermore, such a composition for coated paper is applied on base paper to form a surface coated layer, and coated paper can be obtained thereby. The sheet gloss of coated paper thus obtained is preferably 80% or more as an optical reflectance.

The coated paper having a formed layer containing hollow polymer particles obtained by the method for producing an aqueous dispersion of hollow polymer particles in the present invention has an excellent sheet gloss and print gloss, or the like, and can be used favorably for published material such as books and magazines and commercial printed material such as flyers, brochures, and posters by using such characteristics. In addition, paper having a formed layer containing hollow polymer particles obtained by the method for producing an aqueous dispersion of hollow polymer particles in the present invention can be also used for information recording paper such as thermal recording paper and heat transfer paper which show properties using heat based on thermal properties by air in the inside of hollow polymer particles.

{Examples}

Hereinafter, the present invention will be described in more detail by way of examples. It should be noted, however, that the present invention is not limited to these examples. Unless otherwise specified, "parts" are by weight.

In addition, tests and evaluations were carried out in the following methods.

Water content in polymer particles

The aqueous dispersion of polymer was measured off so that the solid content weight of polymer particles each obtained before the shell swelling step and after the shell swelling step would be 6.3 g and put in a centrifuge tube ($\phi$28.8, height 106.7 mm) in Examples and Comparative Examples. Dilution was then carried out using distilled water so that the total weight would be 35 g. The resultant was centrifuged using a centrifuge at a rotation rate of 18000 rpm for a rotation time of 60 minutes. After this, all the supernatant water was taken out, and the weight (X (g)) was measured and found. Based on these results, a value calculated by the following formula was used as a water content in polymer particles. Higher water content represents that polymer particles are swollen by water.

{Math. 2}

$$\text{Water content in polymer particles (\%)} = \frac{35 - X - 6.3}{35 - 6.3} \times 100$$

Solid content concentration in aqueous dispersion of hollow polymer particles

An aqueous dispersion of hollow polymer particles was taken out in an amount of 2 g and put in an aluminum dish, which was then dried at 105°C for two hours in an oven drier. After this, the weight (Y (g)) of residue remaining on the aluminum dish was measured and found. Based on these results, a value calculated by the following formula was used as the solid content concentration in an aqueous dispersion of hollow polymer particles.

{Math. 3}

$$\text{Solid content concentration (\%)} = \frac{Y}{2} \times 100$$

Amount of generated aggregate in aqueous dispersion of hollow polymer particles

An aqueous dispersion containing hollow polymer particles corresponding to a total solid content amount of 150 g was filtered with a 200-mesh metal net, and the residue remaining on the metal net was washed with water and then dried at 105°C for four hours. Next, the amount of generated aggregate was evaluated by finding the proportion of the weight of residue on the metal net to the total solid content amount of 150 g used for filtration as a percentage.

Number average particle diameter of hollow polymer particles

The number average particle diameter was found by measuring the maximum particle diameter of each of 200 hollow polymer particles using a transmission electron microscope and obtaining the arithmetic average thereof.

Porosity of hollow polymer particles

A value obtained by measuring the maximum particle diameter of each of 200 hollow polymer particles and the maximum diameter of voids with a transmission electron microscope and finding the arithmetic average of "porosity" calculated by the following formula was used as the "porosity" of hollow polymer particles.

{Math. 4}

$$\text{Porosity (\%)} = \frac{(Maximum\ diameter\ of\ void)^3}{(Maximum\ particle\ diameter)^3} \times 100$$

Sheet gloss

About coated paper, the optical reflectance (unit: %) of coated paper surface was measured using a gloss meter (product name "GM-26D" manufactured by Murakami Color Research Laboratory Co., Ltd.) on the condition that the incidence angle is 75 degrees and the reflection angle is 75 degrees. It can be judged that as a value of the obtained reflectance is higher, the sheet gloss is better.

{Example 1}

Production of core polymer particles (A)

To a pressure container equipped with a stirring device, 100 parts of a monomer (50% by weight of methyl methacrylate, 10% by weight of butyl acrylate, and 40% by weight of methacrylic acid), 0.9 parts of sodium polyoxyethylene alkyl ether sulfate (alkyl group $C_{12}H_{35}$, the number of added ethylene oxides 18) as a surfactant, 0.15 parts of sodium tripolyphosphate, and 80 parts of ion exchanged water were added, and the obtained mixture was stirred to prepare an emulsion of a monomer mixture (a) to form a core polymer.

Separately from the above, to a pressure container equipped with a stirring device, 40 parts of ion exchanged water and 0.28 parts of seed latex (methyl methacrylate polymer particles with a volume average particle diameter of 82 nm) were added, and the temperature was raised to 85°C.

To the pressure container with added ion exchanged water and seed latex, 1.63 parts of a 3% aqueous solution of potassium persulfate were added, and 7% by weight of the total amount of the monomer mixture (a) emulsion obtained above was continuously added over three hours and then allowed to react for another hour. After this, 250 parts of ion exchanged water and 18.6 parts of a 3% aqueous solution of potassium persulfate were added, and the remainder of the monomer mixture (a) emulsion obtained above was continuously added over three hours while maintaining the reaction temperature at 85°C. After completion of continuous addition of the emulsion, the reaction was continued for another two hours to obtain an aqueous dispersion containing core polymer particles (A) which were base swellable substances. The polymerization conversion rate at this time was 99%. The volume average particle diameter of the obtained core polymer particles (A) was 400 nm.

Preparation of each monomer mixture

In a reaction container equipped with a stirring device, 100 parts of a monomer (78% by weight of methyl methacrylate, 16% by weight of butyl acrylate, and 6% by weight of methacrylic acid), 0.2 parts of sodium polyoxyethylene alkyl ether sulfate, 0.03 parts of t-dodecylmercaptan, and 160 parts of ion exchanged water were put, and the obtained mixture was then stirred to prepare an emulsion of a monomer mixture (b1) to form an inner shell layer (B1).

Separately from the above, in a reaction container equipped with a stirring device, 100 parts of a monomer (99.0% by weight of styrene, and 1.0% by weight of acrylic acid), 0.6 parts of sodium polyoxyethylene alkyl ether sulfate, and 80 parts of ion exchanged water were put, and the obtained mixture was then stirred to prepare an emulsion of a monomer mixture (b2) to form an intermediate shell layer (B2).

Furthermore, separately from the above, in a reaction container equipped with a stirring device, 100 parts of a monomer (100% by weight of styrene), 0.49 parts of sodium polyoxyethylene alkyl ether sulfate, and 73.2 parts of ion exchanged water were put, and the obtained mixture was then stirred to prepare an emulsion of a monomer mixture (b3) to form an outer shell layer (B3).

Formation of first shell layer (B) (inner shell layer (B1), intermediate shell layer (B2), and outer shell layer (B3))

In a reaction container equipped with a stirring device, 250 parts of ion exchanged water, and an aqueous dispersion containing core polymer particles (A) obtained above were put so that the weight of core polymer particles (A) is about 10 parts (that is, the blended amount of used monomer mixture (a) is 10 parts), and the temperature was raised to 85°C. Next, 10 parts of a 4% by weight of aqueous solution of potassium persulfate were added to the reaction container, and the emulsion of the monomer mixture (b1) to form a first shell layer (B1) (the amount of a monomer mixture (b1) was 10 parts) was then continuously added to the reaction container over 20 minutes while maintaining 85°C to carry out polymerization, and an inner shell layer (B1) was formed.

Next, to the reaction container, the emulsion of the monomer mixture (b2) to form an intermediate shell layer (B2) (the amount of a monomer mixture (b2) was 49 parts) was continuously added to the reaction container over 65 minutes while maintaining the reaction container at 85°C to carry out polymerization, and an intermediate shell layer (B2) was formed.

Furthermore, to the reaction container, the emulsion of the monomer mixture (b3) to form an outer shell layer (B3) (the amount of a monomer mixture (b3) was 41 parts) was continuously added to the reaction container over 55 minutes while maintaining the reaction container at 85°C to carry out polymerization, and an outer shell layer (B3) was formed.

Core swelling step (base treatment)

Immediately after forming the first shell layer (B) (the inner shell layer (B1), the intermediate shell layer (B2), and the outer shell layer (B3)) in this order by the above-described methods, 20 parts of 5% by weight of ammonia water were added to the reaction container, and treatment was carried out by a base on the condition of 90°C for an hour to swell core polymer particles (A) by the base. It should be noted that the pH of the reaction liquid was 7 or higher and 12 or lower over an hour during the base treatment. In addition, a water content in the obtained polymer particles (core polymer particles (A) on which the first shell layer (B) had been formed, which core polymer particles (A) had been swollen) was measured as a water content in polymer particles before the shell swelling step. The results were shown in Table 1.

Shell swelling step

After the core swelling step in the above-described method, 0.65 parts of 10% by weight of diethylhydroxyamine, which is a polymerization inhibitor, were added to the reaction container. After a lapse of ten minutes from the addition of the polymerization inhibitor, 5 parts of a monomer mixture (c) (styrene: 5 parts) were added to the reaction container, which was left in this state for two hours to swell the first shell layer (B). In addition, a water content in the obtained polymer particles (core polymer particles (A) on which the first shell layer (B) had been formed, which core polymer particles (A) and first shell layer (B) had been swollen) was measured as a water content in polymer particles after the shell swelling step. In addition, a difference in water contents was found by the following formula: Difference in water contents = (the water content in polymer particles after the shell swelling step) - (the water content in polymer particles before the shell swelling step). These results were shown in Table 1.

Second shell layer forming step

After the shell swelling step in the above-described method, 10 parts of a 4% by weight of aqueous solution of potassium persulfate were added, and the reaction was continued for another four hours to obtain an aqueous dispersion containing hollow polymer particles. The solid content concentration and the amount of aggregate generated in this aqueous dispersion were measured. It should be noted that the polymerization conversion rate at this time was 99%. The number average particle diameter and porosity of the obtained hollow polymer particles were measured and the results were shown in Table 1.

Preparation of composition for coated paper

To a pressure container equipped with a stirring device, 70 parts of kaolin clay (product name "Astra-Cote" manufactured by Imerys Minerals Japan K.K.) as an inorganic pigment, 30 parts of calcium carbonate (product name "FMT90" manufactured by FIMATEC Ltd.) as an inorganic pigment, 0.15 parts of sodium polyacrylate (product name "ARON T-50" manufactured by TOAGOSEI CO., LTD.) as a dispersant, 0.5 parts of calcium stearate (product name "NOPCOTE C-104HS" manufactured SAN NOPCO LIMITED) as a slip agent, 3 parts of starch phosphate (product name "MS-4600" manufactured by NIHON SHOKUHIN KAKO CO., LTD.), and 9 parts of carboxy-modified styrene-butadiene copolymer latex (product name "Nipol LX407F" manufactured by Zeon Corporation) were added, and 7 parts of the hollow polymer particles obtained above as solid content and ion exchanged water were then added, and the obtained mixture was mixed and stirred to obtain a composition for coated paper with a solid content concentration of 62%.

Production of coated paper

The obtained composition for coated paper was applied on one side of base paper with a basis weight of 65 g/m$^2$ at 10 g/m$^2$, dried at 120°C and carried out super-calender treatment to obtain coated paper. The optical reflectance of the obtained coated paper was measured. The results are shown in Table 1.

{Example 2}

An aqueous dispersion of hollow polymer particles was obtained in the same manner as in Example 1 except that the amount of a monomer mixture (c) added in the shell swelling step was 15 parts (styrene: 15 parts). In addition, water contents in polymer particles before and after the shell swelling step, a difference in water contents, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Example 2. The optical reflectance of the obtained coated paper was measured. The result is shown in Table 1.

{Example 3}

An aqueous dispersion of hollow polymer particles was obtained in the same manner as in Example 1 except that the amount of a monomer mixture (c) added in the shell swelling step was 30 parts (styrene: 30 parts). In addition, water contents in polymer particles before and after the shell swelling step, a difference in water contents, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Example 3. The optical reflectance of the obtained coated paper was measured. The result is shown in Table 1.

{Example 4}

An aqueous dispersion of hollow polymer particles was obtained in the same manner as in Example 1 except that 25 parts of 20% by weight of ammonia water were added in the core swelling step. In addition, water contents in polymer particles before and after the shell swelling step, a difference in water contents, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Example 4. The optical reflectance of the obtained coated paper was measured. The result is shown in Table 1.

{Example 5}

An aqueous dispersion of hollow polymer particles was obtained in the same manner as in Example 1 except that 50 parts of 20% by weight of ammonia water were added in the core swelling step. In addition, water contents in polymer particles before and after the shell swelling step, a difference in water contents, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Example 5. The optical reflectance of the obtained coated paper was measured. The result is shown in Table 1.

{Example 6}

The production of core polymer particles (A) and the formation of a first shell layer (B) were carried out in the same method as in Example 1, and the order of the following steps was changed. Specifically, core polymer particles (A) were produced and a first shell layer (B) was formed, and then the shell swelling step, the core swelling step, and the second shell layer forming step were carried out in this order.

That is, core polymer particles (A) were produced and a first shell layer (B) was formed in the same method as in Example 1, and then a water content in the obtained polymer particles (core polymer particles (A) on which the first shell layer (B) had been formed) was measured as a water content in polymer particles before the shell swelling step. The result was shown in Table 2. Next, as the shell swelling step, first, 0.65 parts of 10% by weight of diethylhydroxyamine, as a polymerization inhibitor, was added to the reaction container. After a lapse of ten minutes from the addition of the polymerization inhibitor, 10 parts of a monomer mixture (c) (styrene: 10 parts) were added to the reaction container, which was left in this state for two hours to swell the first shell layer (B). In addition, a water content in the obtained polymer particles (core polymer particles (A) on which the first shell layer (B) had been formed, which first shell layer (B) had been swollen) was measured as a water content in polymer particles after the shell swelling step. In addition, a difference in water contents was found by the following formula: Difference in water contents = (the water content in polymer particles after the shell swelling step) - (the water content in polymer particles before the shell swelling step). These results were shown in Table 2.

Next, as the core swelling step, 20 parts of 5% by weight of ammonia water were added, and treatment was carried out by the base on the condition of 90°C for an hour to swell core polymer particles (A) by the base. It should be noted that the pH of the reaction liquid was 7 or higher and 12 or lower over an hour during the base treatment.

After this, as the second shell layer forming step, 10 parts of a 4% by weight of aqueous solution of potassium persulfate were added, and the reaction was continued for another four hours. Accordingly, an aqueous dispersion containing hollow polymer particles was obtained. In addition, the solid content concentration and the amount of generated aggregate of the aqueous dispersion of hollow polymer particles, and the number average particle diameter and porosity of hollow polymer particles were measured and shown in Table 2. Furthermore, a composition for coated paper was prepared and coated paper was produced in the same manner as in Example 1 except that the type of hollow polymer particles used was changed to the hollow polymer particles obtained in Example 6. The optical reflectance of the obtained coated paper was measured. The result is shown in Table 2.

{Comparative Example 1}

An aqueous dispersion of hollow polymer particles was obtained in the same manner as in Example 1 except that the shell swelling step was omitted. In addition, the solid content concentration, the amount of generated aggregate, the number average particle diameter, and porosity of the aqueous dispersion of hollow polymer particles were measured and shown in Table 1. It should be noted that although the shell swelling step was not carried out, a water content in core polymer particles (A) on which a first shell layer (B) had been formed, which core polymer particles (A) were swollen, was measured as a water content in polymer particles before the shell swelling step and polymer particles after the shell swelling step. That is, the water content in both polymer particles before the shell swelling step and polymer particles after the shell swelling step is the same value. This value was shown in Table 1. Furthermore, a difference in water contents in polymer particles before and after the shell swelling step was shown in Table 1. Since the water contents were not changed before and after the shell swelling step as described above, the difference in water contents was shown as "0".

Furthermore, a composition for coated paper was prepared and coated paper was produced in the same manner as in Example 1 except that the type of hollow polymer particles used was changed to the hollow polymer particles obtained in Comparative Example 1. The optical reflectance of the obtained coated paper was measured. The result is shown in Table 1.

{Comparative Example 2}

An aqueous dispersion of hollow polymer particles was obtained in the same manner as in Example 1 except that 10% by weight of diethylhydroxyamine, which is a polymerization inhibitor, was not added in the shell swelling step. In addition, water contents in polymer particles before and after the shell swelling step, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Comparative Example 2. The optical reflectance of the obtained coated paper was measured. The result is shown in Table 1.

{Comparative Example 3}

An aqueous dispersion of hollow polymer particles was obtained in the same manner as in Example 1 except that 175 parts of 20% by weight of ammonia water were added in the core swelling step. In addition, water contents in polymer particles before and after the shell swelling step, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Comparative Example 3. The optical reflectance of the obtained coated paper was measured. The result is shown in Table 1.

{Comparative Example 4}

An aqueous dispersion of hollow polymer particles was obtained in the same manner as in Example 1 except that the core swelling step was omitted (that is, that ammonia water was not added in the core swelling step). In addition, water contents in polymer particles before and after the shell swelling step, and the solid content concentration, the amount of generated aggregate, the number average particle diameter, and porosity of the aqueous dispersion of hollow polymer particles were measured and shown in Table 1. Furthermore, a composition for coated paper was prepared and coated paper was produced in the same manner as in Example 1 except that the type of hollow polymer particles used was changed to the hollow polymer particles obtained in Comparative Example 4. The optical reflectance of the obtained coated paper was measured. The result is shown in Table 1.

{Comparative Example 5}

An aqueous dispersion of hollow polymer particles was attempted to be produced in the same manner as in Example 1 except that the amount of a monomer mixture (c) added in the shell swelling step was 50 parts (styrene: 50 parts), and aggregation occurred after the shell swelling step. Therefore, water contents in polymer particles after the shell swelling step, and the solid content concentration, the amount of generated aggregate, the number average particle diameter, and porosity of the aqueous dispersion of hollow polymer particles could not be measured. In addition, a composition for coated paper could not be prepared and coated paper could not be also produced. It should be noted that a water content in polymer particles before the shell swelling step was measured. The result is shown in Table 1.

{Table 1}

| | | | EXAMPLES | | | | | COMPARATIVE EXAMPLES | | | | |
|---|---|---|---|---|---|---|---|---|---|---|---|---|
| | | | 1 | 2 | 3 | 4 | 5 | 1 | 2 | 3 | 4 | 5 |
| CORE POLYMER PARTICLES (A) | | COMPOSITION OF MONOMER MIXTURE (a) : (% by weight) | | | | | | | | | | |
| | | METHYL METACRYLATE | 50 | 50 | 50 | 50 | 50 | 50 | 50 | 50 | 50 | 50 |
| | | BUTYL ACRYLATE | 10 | 10 | 10 | 10 | 10 | 10 | 10 | 10 | 10 | 10 |
| | | METHACRYLIC ACID | 40 | 40 | 40 | 40 | 40 | 40 | 40 | 40 | 40 | 40 |
| | | USED AMOUNT OF MONOMER MIXTURE (a) : (parts) | 10 | 10 | 10 | 10 | 10 | 10 | 10 | 10 | 10 | 10 |
| FORMATION OF FIRST SHELL LAYER (B) | FORMATION OF INNER SHELL LAYER (B1) | COMPOSITION OF MONOMER MIXTURE (b1) : (% by weight) | | | | | | | | | | |
| | | METHYL METACRYLATE | 78 | 78 | 78 | 78 | 78 | 78 | 78 | 78 | 78 | 78 |
| | | BUTYL ACRYLATE | 16 | 16 | 16 | 16 | 16 | 16 | 16 | 16 | 16 | 16 |
| | | METHACRYLIC ACID | 6 | 6 | 6 | 6 | 6 | 6 | 6 | 6 | 6 | 6 |
| | | USED AMOUNT OF MONOMER MIXTURE (b1) : (parts) | 10 | 10 | 10 | 10 | 10 | 10 | 10 | 10 | 10 | 10 |

(continued)

| | | | EXAMPLES | | | | | COMPARATIVE EXAMPLES | | | | |
|---|---|---|---|---|---|---|---|---|---|---|---|---|
| | | | 1 | 2 | 3 | 4 | 5 | 1 | 2 | 3 | 4 | 5 |
| FORMATION OF INTERMEDIATE SHELL LAYER (B2) | COMPOSITION OF MONOMER MIXTURE (b2): (% by weight)  STYRENE  ACRYLIC ACID | | 99 1 | 99 1 | 99 1 | 99 1 | 99 1 | 99 1 | 99 1 | 99 1 | 99 1 | 99 1 |
| | USED AMOUNT OF MONOMER MIXTURE (b2): (parts) | | 49 | 49 | 49 | 49 | 49 | 49 | 49 | 49 | 49 | 49 |
| FORMATION OF OUTER SHELL LAYER (B3) | COMPOSITION OF MONOMER MIXTURE (b3): (% by weight)  STYRENE | | 100 | 100 | 100 | 100 | 100 | 100 | 100 | 100 | 100 | 100 |
| | USED AMOUNT OF MONOMER MIXTURE (b3): (parts) | | 41 | 41 | 41 | 41 | 41 | 41 | 41 | 41 | 41 | 41 |
| CORE SWELLING STEP | | USED AMOUNT OF AMMONIA: (parts) | 1 | 1 | 1 | 5 | 10 | 1 | 1 | 35 | 0 | 1 |

EP 3 369 750 A1

(continued)

| SHELL SWELLING STEP | | EXAMPLES | | | | | COMPARATIVE EXAMPLES | | | | |
|---|---|---|---|---|---|---|---|---|---|---|---|
| | | 1 | 2 | 3 | 4 | 5 | 1 | 2 | 3 | 4 | 5 |
| SHELL SWELLING STEP | USED AMOUNT OF DIETHYLHYDROXYAMINE: (parts) | 0.065 | 0.065 | 0.065 | 0.065 | 0.065 | - | - | 0.065 | 0.065 | 0.065 |
| | COMPOSITION OF MONOMER MIXTURE (c): (% by weight) | | | | | | | | | | |
| | STYRENE | 100 | 100 | 100 | 100 | 100 | - | 100 | 100 | 100 | 100 |
| | USED AMOUNT OF MONOMER MIXTURE (c): (parts) | 5 | 15 | 30 | 5 | 5 | 0 | 5 | 5 | 5 | 50 |
| WATER CONTENT IN POLYMER PARTICLES | | | | | | | | | | | |
| WATER CONTENT IN POLYMER PARTICLES BEFORE SHELL SWELLING STEP (%) | | 44 | 44 | 44 | 44 | 43 | 44 | 44 | 42 | 11 | 44 |
| WATER CONTENT IN POLYMER PARTICLES AFTER SHELL SWELLING STEP (%) | | 53 | 49 | 48 | 49 | 48 | 44 | 42 | 40 | 11 | AGGREGATION |
| DIFFERENCE IN WATER CONTENTS IN POLYMER PARTICLES BEFORE AND AFTER SHELL SWELLING STEP (%) ((WATER CONTENT IN POLYMER PARTICLES AFTER SHELL SWELLING STEP) - (WATER CONTENT IN POLYMER PARTICLES BEFORE SHELL SWELLING STEP)) | | 9 | 5 | 4 | 5 | 5 | 0 | -2 | -2 | 0 | - |
| AQUEOUS DISPERSION OF HOLLOW POLYMER PARTICLES | | | | | | | | | | | |
| SOLID CONTENT CONCENTRATION (%) | | 24.6 | 26.1 | 28.4 | 24.3 | 23.1 | 23.7 | 24.5 | 18.5 | 25.6 | UNEVALUABLE |
| AMOUNT OF GENERATED AGGREGATE (%) | | 0.011 | 0.018 | 0.025 | 0.045 | 0.065 | 0.008 | 0.010 | 0.950 | 0.003 | AGGREGATION |
| HOLLOW POLYMER PARTICLES | | | | | | | | | | | |
| NUMBER AVERAGE PARTICLE DIAMETER ($\mu$m) | | 1.2 | 1.2 | 1.3 | 1.2 | 1.1 | 1.0 | 1.0 | 0.9 | 0.7 | AGGREGATION UNEVALUABLE |
| POROSITY (%) | | 57 | 55 | 54 | 55 | 54 | 51 | 50 | 48 | 0 | |

(continued)

| | EXAMPLES | | | | | COMPARATIVE EXAMPLES | | | | |
|---|---|---|---|---|---|---|---|---|---|---|
| | 1 | 2 | 3 | 4 | 5 | 1 | 2 | 3 | 4 | 5 |
| COMPOSITION FOR COATED PAPER | | | | | | | | | | |
| SOLID CONTENT CONCENTRATION (%) | 62 | 62 | 62 | 62 | 62 | 62 | 62 | 62 | 62 | UNEVALUABLE |
| NUMBER OF PARTS OF BLENDED HOLLOW POLYMER PARTICLES (parts) | 7 | 7 | 7 | 7 | 7 | 7 | 7 | 7 | 7 | |
| COATED PAPER PROPERTY (SHEET GLOSS) | | | | | | | | | | |
| OPTICAL REFLECTANCE (%) | 81.2 | 80.8 | 80.6 | 80.7 | 80.5 | 79.0 | 78.4 | 77.0 | 69.0 | UNEVALUABLE |

{Table 2}

| | | | EXAMPLE |
|---|---|---|---|
| | | | 6 |
| CORE POLYMER PARTICLES (A) | | COMPOSITION OF MONOMER MIXTURE (a): (% by weight)<br>　　METHYL METACRYLATE<br>　　BUTYL ACRYLATE<br>METHACRYLIC ACID | <br><br>50<br>10<br>40 |
| | | USED AMOUNT OF MONOMER MIXTURE (a): (parts) | 10 |
| FORMATION OF FIRST SHELL LAYER (B) | FORMATION OF INNER SHELL LAYER (B1) | COMPOSITION OF MONOMER MIXTURE (b1) : (% by weight)<br>　　METHYL METACRYLATE<br>　　BUTYL ACRYLATE<br>　　METHACRYLIC ACID | <br><br>78<br>16<br>6 |
| | | USED AMOUNT OF MONOMER MIXTURE (b1): (parts) | 10 |
| | FORMATION OF INTERMEDIATE SHELL LAYER (B2) | COMPOSITION OF MONOMER MIXTURE (b2): (% by weight)<br>　　STYRENE<br>　　ACRYLIC ACID | <br><br>99<br>1 |
| | | USED AMOUNT OF MONOMER MIXTURE (b2): (parts) | 49 |
| | FORMATION OF OUTER SHELL LAYER (B3) | COMPOSITION OF MONOMER MIXTURE (b3): (% by weight)<br>　　STYRENE | <br><br>100 |
| | | USED AMOUNT OF MONOMER MIXTURE (b3): (parts) | 41 |
| SHELL SWELLING STEP | | USED AMOUNT OF DIETHYLHYDROXYAMINE: (parts) | 0.065 |
| | | COMPOSITION OF MONOMER MIXTURE (c) : (% by weight)<br>　　STYRENE | <br><br>100 |
| | | USED AMOUNT OF MONOMER MIXTURE (c): (parts) | 10 |
| CORE SWELLING STEP | | USED AMOUNT OF AMMONIA: (parts) | 1 |
| WATER CONTENT IN POLYMER PARTICLES | | | |
| WATER CONTENT IN POLYMER PARTICLES BEFORE SHELL SWELLING STEP (%) | | | 12 |
| WATER CONTENT IN POLYMER PARTICLES AFTER SHELL SWELLING STEP (%) | | | 49 |

(continued)

| | EXAMPLE |
|---|---|
| | 6 |
| DIFFERENCE IN WATER CONTENTS IN POLYMER PARTICLES BEFORE AND AFTER SHELL SWELLING STEP (%) ((WATER CONTENT IN POLYMER PARTICLES AFTER SHELL SWELLING STEP) - (WATER CONTENT IN POLYMER PARTICLES BEFORE SHELL SWELLING STEP)) | 37 |
| AQUEOUS DISPERSION OF HOLLOW POLYMER PARTICLES | |
| SOLID CONTENT CONCENTRATION (t) | 25.3 |
| AMOUNT OF GENERATED AGGREGATE (%) | 0.006 |
| HOLLOW POLYMER PARTICLES | |
| NUMBER AVERAGE PARTICLE DIAMETER ($\mu$m) | 1.2 |
| POROSITY (%) | 55 |
| COMPOSITION FOR COATED PAPER | |
| SOLID CONTENT CONCENTRATION (%) | 62 |
| NUMBER OF PARTS OF BLENDED HOLLOW POLYMER PARTICLES (parts) | 7 |
| COATED PAPER PROPERTY (SHEET GLOSS) | |
| OPTICAL REFLECTANCE (%) | 80.7 |

As shown in Table 1 and Table 2, it was found that in Example 1 to Example 6 in which the added amount of ammonia used during the core swelling step was in a range of 0.1 to 30 parts with respect to a total of 100 parts of a monomer contained in a monomer mixture (a) and monomer mixtures (b) (a monomer mixture (b1), a monomer mixture (b2), and a monomer mixture (b3)), the added amount of a monomer mixture (c) used during the shell swelling step was in a range of 0.1 to 45 parts with respect to a total of 100 parts of a monomer contained in a monomer mixture (a) and monomer mixtures (b) (a monomer mixture (b1), a monomer mixture (b2), and a monomer mixture (b3)), and a difference in water contents in polymer particles before and after the shell swelling step was in a range of 1 to 45%, the amount of generated aggregate was small, the solid content concentration was also high, productivity was excellent, porosity was high, and sheet gloss of a coated paper property was excellent.

In addition, as shown in Table 1, it was found that in Comparative Example 1 in which the shell swelling step was omitted, porosity was low and moreover sheet gloss of a coated paper property was poor compared to those in Example 1 in which the shell swelling step was carried out.

In addition, as shown in Table 1, it was found that in Comparative Example 2 in which a difference in water contents in polymer particles before and after the shell swelling step was low, porosity was low and moreover sheet gloss of a coated paper property was poor compared to those in Example 1.

As shown in Table 1, in Comparative Example 3, because the added amount of ammonia used during the core swelling step is large, the concentration of salt in a medium is high, and water is discharged from core polymer particles (A) swollen by the base to maintain the balance of the salt concentration in the core polymer particles (A) and the medium, and thus a difference in water contents in polymer particles before and after the shell swelling step decreases. As a result, the porosity is low compared to that in Example 1. Furthermore, because a large amount of alkali is added, the solid content concentration of hollow polymer particles decreases, and moreover the amount of generated aggregate is large and productivity is poor. Because of a low porosity, sheet gloss of a coated paper property is poor.

In addition, as shown in Table 1, it was found that in Comparative Example 4 in which the core swelling step was omitted (that is, the added amount of ammonia in the core swelling step was zero), core polymer particles (A) were not swollen by a base at all, and consequently the porosity was low and the sheet gloss of a coated paper property was poor compared to those in Example 1.

In addition, as shown in Table 1, it was found that because the added amount of a monomer mixture (c) was too large, a large amount of aggregate was generated after addition, and finally an aqueous dispersion could not be obtained in Comparative Example 5.

**Claims**

1. A method for producing an aqueous dispersion of hollow polymer particles, the method comprising:

   a core forming step of forming core polymer particles (A) by copolymerizing a monomer mixture (a);
   a first shell layer forming step of forming a first shell layer (B) which substantially surrounds the core polymer particles (A) and is not swollen by a base by copolymerizing a monomer mixture (b) in the presence of the core polymer particles (A);
   a core swelling step of swelling the core polymer particles (A) by adding a base to an aqueous dispersion containing the core polymer particles (A) on which the first shell layer (B) has been formed in an amount of 0.1 to 30 parts by weight with respect to a total of 100 parts by weight of a monomer contained in the monomer mixture (a) and the monomer mixture (b); and
   a shell swelling step of swelling the first shell layer (B) by adding a monomer mixture (c) to an aqueous dispersion containing the core polymer particles (A) on which the first shell layer (B) has been formed in an amount of 0.1 to 45 parts by weight with respect to a total of 100 parts by weight of a monomer contained in the monomer mixture (a) and the monomer mixture (b),
   wherein a difference in water contents represented by
   (a water content in the core polymer particles (A) on which the first shell layer (B) has been formed after the shell swelling step) - (a water content in the core polymer particles (A) on which the first shell layer (B) has been formed before the shell swelling step)
   is 1 to 45%.

2. The method for producing an aqueous dispersion of hollow polymer particles according to claim 1, the method comprising a second shell layer forming step of forming a second shell layer (C) by copolymerizing the monomer mixture (c) to the swollen core polymer particles (A) in the presence of an aqueous dispersion containing the core polymer particles (A) on which the swollen first shell layer (B) has been formed after the core swelling step and the shell swelling step.

3. The method for producing an aqueous dispersion of hollow polymer particles according to claim 1 or 2, wherein the first shell layer forming step comprises:

   an inner shell layer forming step of forming an inner shell layer (B1) which substantially surrounds the core polymer particles (A) by copolymerizing a monomer mixture (b1) in the presence of the core polymer particles (A);
   an intermediate shell layer forming step of forming an intermediate shell layer (B2) which substantially surrounds the inner shell layer (B1) by copolymerizing a monomer mixture (b2) in the presence of the core polymer particles (A) on which the inner shell layer (B1) has been formed; and
   an outer shell layer forming step of forming an outer shell layer (B3) which substantially surrounds the intermediate shell layer (B2) by copolymerizing a monomer mixture (b3) in the presence of the core polymer particles (A) on which the inner shell layer (B1) and the intermediate shell layer (B2) have been formed.

4. The method for producing an aqueous dispersion of hollow polymer particles according to claim 3, wherein
   the monomer mixture (a) comprises 20 to 50% by weight of an acid group-containing monomer and 50 to 80% by weight of a monomer copolymerizable with this,
   the monomer mixture (b1) comprises 1 to 10% by weight of an acid group-containing monomer and 90 to 99% by weight of a monomer copolymerizable with this,
   the monomer mixture (b2) comprises 0.2 to 2.5% by weight of an acid group-containing monomer and 97.5 to 99.8% by weight of a monomer copolymerizable with this, and
   the monomer mixture (b3) comprises 0 to 0.15% by weight of an acid group-containing monomer and 99.85 to 100% by weight of a monomer other than the acid group-containing monomer.

5. The method for producing an aqueous dispersion of hollow polymer particles according to claim 3 or 4, wherein a proportion of the monomer mixture (a), the monomer mixture (b1), the monomer mixture (b2), and the monomer mixture (b3) is (1 to 40)/(1 to 40)/(10 to 88)/(10 to 88) as a weight ratio of "monomer mixture (a)/monomer mixture (b1)/monomer mixture (b2)/monomer mixture (b3)".

6. A composition for paper coating obtained by using an aqueous dispersion of hollow polymer particles obtained by the method for production according to claims 1 to 5.

**7.** Coated paper obtained by using the composition for paper coating according to claim 6.

**INTERNATIONAL SEARCH REPORT**

| International application No. |
| --- |
| PCT/JP2016/081066 |

| A. CLASSIFICATION OF SUBJECT MATTER |
| --- |
| $C08F2/44$(2006.01)i, $C08F2/22$(2006.01)i, $C08F265/06$(2006.01)i, $D21H19/42$ (2006.01)i, $D21H21/54$(2006.01)i |

According to International Patent Classification (IPC) or to both national classification and IPC

| B. FIELDS SEARCHED |
| --- |
| Minimum documentation searched (classification system followed by classification symbols) |
| $C08F2/00-2/60$, $C08F265/06$, $D21H19/42$, $D21H21/54$ |

| Documentation searched other than minimum documentation to the extent that such documents are included in the fields searched |
| --- |
| Jitsuyo Shinan Koho                1922-1996   Jitsuyo Shinan Toroku Koho    1996-2017 |
| Kokai Jitsuyo Shinan Koho    1971-2017   Toroku Jitsuyo Shinan Koho    1994-2017 |

| Electronic data base consulted during the international search (name of data base and, where practicable, search terms used) |
| --- |
| |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | WO 2015/024882 A1  (BASF SE), 26 February 2015 (26.02.2015), claims; page 3, line 22 to page 7, line 24; examples & JP 2016-534194 A claims; paragraphs [0010] to [0037]; examples & US 2016/0208038 A1 claims; paragraphs [0020] to [0049]; examples & EP 3036293 A1 | 1-7 |
| A | JP 2002-200846 A  (Nippon Paper Industries Co., Ltd.), 16 July 2002 (16.07.2002), claims; referential example 1 (Family: none) | 1-7 |

| ☒ | Further documents are listed in the continuation of Box C. | ☐ | See patent family annex. |
| --- | --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 January 2017 (11.01.17) | 24 January 2017 (24.01.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

## INTERNATIONAL SEARCH REPORT

International application No.

PCT/JP2016/081066

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-182761 A  (Nippon Zeon Co., Ltd.),<br>07 July 1998 (07.07.1998),<br>claims; examples<br>(Family: none) | 1-7 |
| A | JP 2002-30113 A  (JSR Corp.),<br>31 January 2002 (31.01.2002),<br>claims; examples<br>(Family: none) | 1-7 |
| A | JP 7-196747 A  (Korea Chemical Co., Ltd.),<br>01 August 1995 (01.08.1995),<br>claims; examples<br>& US 5639805 A<br>claims; examples<br>& KR 10-1994-0007353 B1 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014142237 A
- JP 4413295 B

- JP 2002241448 A